# EUROPÄISCHE PATENTSCHRIFT

(11) **EP 3 328 695 B1**
(45) Veröffentlichungstag und Bekanntmachung des Hinweises auf die Patenterteilung: **10.07.2019**
(21) Anmeldenummer: 16726851.5
(22) Anmeldetag: 30.05.2016
(51) Int. Cl.: B60T 13/10, B60T 13/74

(54) **VERFAHREN ZUM ABBREMSEN EINES FAHRZEUGS**
METHOD FOR BRAKING A VEHICLE
PROCÉDÉ DE FREINAGE D'UN VEHICULE

(30) Priorität: 27.07.2015 DE 102015214117
(43) Veröffentlichungstag der Anmeldung: 06.06.2018
(73) Patentinhaber: Robert Bosch GmbH, 70442 Stuttgart (DE)
(72) Erfinder: MANNHERZ, Edith, 74199 Untergruppenbach (DE); PUTZER, Tobias, 74177 Bad Friedrichshall (DE)
(86) Internationale Anmeldenummer: PCT/EP2016/062127
(87) Internationale Veröffentlichungsnummer: WO 2017/016705

(56) Entgegenhaltungen:
- WO-A2-2012/079802
- DE-A1-102012 025 291
- US-A1- 2007 278 856

## Beschreibung

Die Erfindung bezieht sich auf ein Verfahren zum Abbremsen eines Fahrzeugs, das mit einem Bremssystem mit einer hydraulischen Fahrzeugbremse und darüber hinaus mit einer elektromechanischen Bremsvorrichtung mit einem elektrischen Bremsmotor ausgestattet ist.

### Stand der Technik

In der DE 10 2006 048 910 A1 wird ein Parkassistenzsystem für ein Fahrzeug beschrieben, das den Fahrer während eines Parkvorgangs unterstützt. Bei derartigen Parkassistenzsystemen wird die Umgebung des Fahrzeugs mit Sensoren abgetastet und das Fahrzeug automatisch abgebremst, wenn es sich einem anderen Objekt wie beispielsweise einem parkenden Fahrzeug zu stark nähert. Der Abbremsvorgang erfolgt regelmäßig über die Betriebs-Bremsanlage des Fahrzeuges, bei der es sich in der Regel um eine hydraulische Fahrzeugbremse handelt.

Gemäß der DE 10 2006 048 910 A1 wird während eines Parkvorgangs die Funktion der Betriebs-Bremsanlage überwacht und bei einem festgestellten Fehler anstelle der Betriebs-Bremsanlage entweder eine automatische Parkbremse betätigt und/oder das Fahrzeug über ein Automatikgetriebe abgebremst. Die automatische Parkbremse umfasst einen Elektromotor, über den ein Bremskolben gegen eine Bremsscheibe kraftbeaufschlagt wird. Bei einem Eingriff in das Automatikgetriebe wird die Parkposition eingelegt, um Bremskraft zu generieren.

Die US 2007/02788856 A1 offenbart ein Bremssystem in einem Fahrzeug mit einer hydraulischen Fahrzeugbremse und eine elektromechanische Bremsvorrichtung mit einem elektrischen Bremsmotor, der einen Bremskolben gegen eine Bremsscheibe verstellt. Bei ordnungsgemäßer Funktion wird das Fahrzeug über die hydraulische Fahrzeugbremse abgebremst. Bei einem Fehler in der hydraulischen Fahrzeugbremse wird auf das elektromechanische Bremssystem umgeschaltet, um eine Bremskraft zu erzeugen.

Aus der DE 10 2012 025 291 A1 ist es bekannt, einen elektromechanischen Aktuator in einem Fahrdynamikregelbetrieb, beispielsweise einem ASR- oder ESP-Betrieb einzusetzen und zur Hydraulikdruckmodulation in der hydraulischen Fahrzeugbremse zu verwenden.

### Offenbarung der Erfindung

Das erfindungsgemäße Verfahren bezieht sich auf das Abbremsen eines Fahrzeugs, das mit einem Bremssystem ausgestattet ist, welches zum einen eine hydraulische Fahrzeugbremse und zum andern eine elektromechanische Bremsvorrichtung mit einem elektrischen Bremsmotor umfasst. Die elektromechanische Bremsvorrichtung mit Bremsmotor wird üblicherweise als Park- bzw. Feststellbremse eingesetzt, um eine das Fahrzeug im Stillstand festsetzende Klemmkraft zu erzeugen. Bei einer Betätigung des elektrischen Bremsmotors wird die Rotationsbewegung des Rotors des Bremsmotors in eine axiale Stellbewegung einer Spindel übertragen, über die ein Bremskolben, welcher Träger eines Bremsbelages ist, axial gegen eine Bremsscheibe gedrückt wird. Bei dem Bremskolben handelt es sich vorzugsweise um den Bremskolben der hydraulischen Fahrzeugbremse, der durch den hydraulischen Bremsdruck gegen die Bremsscheibe beaufschlagt wird.

Die elektromechanische Bremsvorrichtung mit dem elektrischen Bremsmotor wird vorzugsweise nur im geringen Geschwindigkeitsbereich eingesetzt, der für Parkvorgänge typisch ist. Grundsätzlich kommt aber auch ein Einsatz bei höheren Geschwindigkeiten und/oder unabhängig von Parkvorgängen in Betracht.

Bei dem Verfahren zum Abbremsen des Fahrzeugs wird für den Fall, dass die hydraulische Fahrzeugbremse teilweise oder vollständig ausfällt und das Fahrzeug somit nicht oder nicht vollständig über die hydraulische Fahrzeugbremse abgebremst werden kann, der elektrische Bremsmotor der elektromechanischen Bremsvorrichtung zur Erzeugung einer Bremskraft betätigt. Zusätzlich wird im Antriebsstrang des Fahrzeugs ein abbremsendes Moment erzeugt, so dass insgesamt das Fahrzeug nicht nur über die elektromechanische Bremsvorrichtung, sondern darüber hinaus über das abbremsende Moment im Antriebsstrang gebremst wird. Der Antriebsstrang im Fahrzeug umfasst mindestens einen Antriebsmotor und ein Getriebe zur Übertragung der Antriebsbewegung des Antriebsmotors auf die Räder des Fahrzeuges. Die Vorgehensweise mit dem abbremsenden Moment im Antriebsstrang hat den Vorteil, dass insgesamt eine höhere Bremskraft zur Verfügung steht und dementsprechend das Fahrzeug in kürzerer Zeit abgebremst und gegebenenfalls bis zum Stillstand gebracht werden kann.

Die elektromechanische Bremsvorrichtung muss üblicherweise zunächst einen Leerweg zurücklegen, bevor der Bremsbelag am Bremskolben in Anlage an die Bremsscheibe gelangt und eine Bremskraft aufgebaut werden kann. Während des Leerwegs steht in der elektromechanischen Bremsvorrichtung keine Bremskraft zur Verfügung. In dieser Phase kann jedoch bereits über den Antriebsstrang ein abbremsendes Moment erzeugt werden, so dass der Zeitraum, in welchem keine Abbremsung erfolgt, signifikant verkürzt, gegebenenfalls bis auf null reduziert wird. Üblicherweise wird bei dem erfindungsgemäßen Verfahren bei einem Ausfall der hydraulischen Fahrzeugbremse zuerst ein abbremsendes Moment über den Eingriff in den Antriebsstrang generiert und anschließend eine Bremskraft über die elektromechanische Bremsvorrichtung erzeugt. Hierbei wird das abbremsende Moment des Antriebsstrangs erfindungsgemäß auch über den Zeitpunkt hinaus aufrechtzuerhalten, zu dem in der elektromechanischen Bremsvorrichtung eine Bremskraft bereitgestellt wird. Es sind aber auch Ausführungen möglich, bei denen das abbremsende Moment des Antriebsstrangs endet, sobald über die elektromechanische Bremsvorrichtung eine ausreichend hohe Bremskraft zur Verfügung steht.

Das Verfahren wird vorzugsweise im Parkbetrieb des Fahrzeugs durchgeführt und ist Teil eines Parkassistenzsystems, mit dem das Fahrzeug im Parkbetrieb teilweise oder vollständig autonom ein- und/oder ausgeparkt werden kann. Der Parkbetrieb wird insbesondere nur unterhalb einer Grenzgeschwindigkeit durchgeführt. Das Parkassistenzsystem umfasst eine Sensorik im Fahrzeug, über die der Abstand zu umgebenden Hindernissen wie beispielsweise parkenden Fahrzeugen gemessen wird, sowie ein Regel- bzw. Steuergerät, in welchem die Sensordaten verarbeitet und Stellsignale zur Ansteuerung der elektromechanischen Bremsvorrichtung erzeugt werden.

Es ist auch möglich, das Verfahren zum automatischen Abbremsen unabhängig vom Parkbetrieb durchzuführen, jedoch vorzugsweise unterhalb einer Grenzgeschwindigkeit. Gegebenenfalls wird das Verfahren zum Abbremsen auch unabhängig von einer Grenzgeschwindigkeit durchgeführt.

Gemäß einer weiteren zweckmäßigen Ausführung wird nach dem Ausfall der hydraulischen Fahrzeugbremse zunächst in der elektromechanischen Bremsvorrichtung ein Zuspann- bzw. Bremsvorgang eingeleitet und erst im Anschluss hieran der Antriebsstrang so verstellt, dass ein abbremsendes Moment erzeugt wird. Hierdurch ist sichergestellt, dass der Leerweg im elektrischen Bremsmotor in kürzest möglicher Zeit überwunden und in der elektromechanischen Bremsvorrichtung eine Klemmkraft erzeugt werden kann. Es ist aber auch möglich, die Betätigung der elektromechanischen Bremsvorrichtung und die Verstellung des Antriebsstranges gleichzeitig durchzuführen oder zuerst den Antriebsstrang zur Erzeugung eines abbremsenden Momentes zu verstellen und anschließend die elektromechanische Bremsvorrichtung zu betätigen.

Gemäß einer weiteren zweckmäßigen Ausführung, die sich auf ein Fahrzeug mit Automatikgetriebe bezieht, wird in dem Automatikgetriebe, welches Teil des Antriebsstranges ist, die kleinstmögliche Gangstufe eingestellt. Die kleinstmögliche Gangstufe ist geschwindigkeitsabhängig, wobei bei einer Durchführung des Verfahrens im Parkbetrieb die kleinstmögliche Gangstufe in der Regel der erste Gang ist. Bei höheren Geschwindigkeiten kann gegebenenfalls auch ein höherer Gang als kleinstmögliche Gangstufe eingestellt werden. Die kleinstmögliche Gangstufe stellt sicher, dass ein maximal mögliches Motorschleppmoment als abbremsendes Moment wirksam wird.

Als Antriebsmotor, der Teil des Antriebsstranges ist, kommen sowohl Verbrennungsmotoren als auch Elektromotoren in Betracht, die entweder jeweils als alleinige Antriebsquelle eingesetzt werden oder, im Falle eines Hybrid-Antriebes, in Kombination. Soweit ein Verbrennungsmotor im Antriebsstrang vorhanden ist, wird dieser, gemäß einer weiteren zweckmäßigen Ausführung, zum Abbremsen des Fahrzeuges abgeschaltet. Hierdurch ist sichergestellt, dass das maximal mögliche Motorschleppmoment zum Abbremsen des Fahrzeuges ausgenutzt werden kann.

Im Falle eines oder mehrerer Elektromotoren im Antriebsstrang, die entweder allein oder zusätzlich zu einem Verbrennungsmotor vorhanden sind, werden diese zum Abbremsen des Fahrzeugs vorteilhafterweise in den Generatorbetrieb geschaltet. Hierdurch wird ein motorisches Bremsmoment im Elektromotor erzeugt, welches das Fahrzeug abbremst; zusätzlich wird die Fahrzeugbatterie aufgeladen.

Gemäß einer weiteren, zweckmäßigen Ausführung wird zumindest ein Elektromotor im Antriebsstrang entgegen der Fahrtrichtung beschleunigt. Das Fahrzeug bewegt sich gegen die Wirkrichtung des elektrischen Antriebsmotors, wodurch ein abbremsendes Moment erzeugt wird.

Gemäß einer weiteren zweckmäßigen Ausführung, die sich auf ein Fahrzeug mit Allradantrieb bezieht, wird ein Mitteldifferential zum Vorder- und Hinterachse gesperrt, so dass Vorder- und Hinterachse kinematisch gekoppelt sind und gemeinsam umlaufen und auf alle Räder ein Bremsmoment wirkt. Bei allradgetriebenen Fahrzeugen kann hierdurch ein erhöhtes Bremsmoment übertragen werden.

Die verschiedenen Verfahrensschritte zum Abbremsen des Fahrzeuges werden in einem Regel- bzw. Steuergerät im Fahrzeug durchgeführt, in welchem Stellsignale zur Ansteuerung der einstellbaren Komponenten sowohl des Bremssystems als auch des Antriebsstranges erzeugt werden.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein allradgetriebenes Fahrzeug,
- Fig. 2: einen Schnitt durch eine elektromechanische Feststellbremse für ein Fahrzeug, bei der die Klemmkraft über einen elektrischen Bremsmotor erzeugt wird,
- Fig. 3: ein Ablaufschema mit Verfahrensschritten zum Abbremsen des Fahrzeugs im Parkbetrieb bei Ausfall der hydraulischen Fahrzeugbremse, dargestellt für ein Fahrzeug mit Front- oder Heckantrieb,
- Fig. 4: ein weiteres Ablaufschema zum Abbremsen eines Fahrzeugs im Parkbetrieb, dargestellt für ein Allradfahrzeug,
- Fig. 5: ein weiteres Ablaufschema zum Abbremsen eines Fahrzeugs im Parkbetrieb, dargestellt für ein Fahrzeug mit elektromotorischem Antrieb.

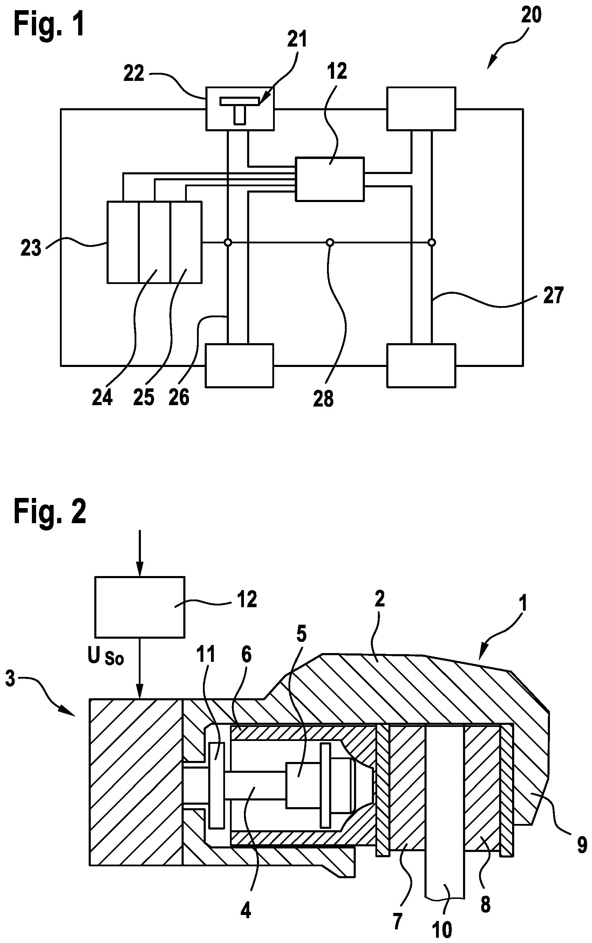

Fig. 1 zeigt ein Allradfahrzeug 20 mit hydraulischen Fahrzeugbremsen 21 an jedem Fahrzeugrad 22. Der Antriebsstrang des Fahrzeugs 20 ist von einem Verbrennungsmotor 23 und einem nachgeschalteten Automatikgetriebe 24 gebildet. Das Fahrzeug 20 kann über einen Hybridantrieb mit einem an das Automatikgetriebe 24 angeflanschten elektrischen Antriebsmotor 25 verfügen. Die Antriebsbewegung des Verbrennungsmotors 23 und ggf. des elektrischen Antriebsmotors 25 wird auf die Vorderachse 26 des Fahrzeugs und über ein Mitteldifferential 28 auf die Hinterachse 27 übertragen.

Die einstellbaren Komponenten des Fahrzeugs 20, insbesondere die hydraulische Fahrzeugbremse 21, die Komponenten des Antriebsstrangs mit Verbrennungsmotor 23, Automatikgetriebe 24 und optional dem elektrischen Antriebsmotor 25 sowie das Mitteldifferential 28 werden über Stellsignale eines Regel- bzw. Steuergeräts 12 eingestellt.

Das Fahrzeug 20 ist des Weiteren mit einer elektromechanischen Bremsvorrichtung mit einem elektrischen Bremsmotor ausgestattet, die als Park- bzw. Feststellbremse zum Erzeugen einer das Fahrzeug im Stillstand der festsitzenden Klemmkraft dient. Eine derartige elektromechanische Bremsvorrichtung 1 ist in Fig. 2 dargestellt.

Die elektromechanische Bremsvorrichtung 1 umfasst einen Bremssattel 2 mit einer Zange 9, welche eine Bremsscheibe 10 übergreift. Als Stellglied weist die Feststellbremse 1 einen Gleichstrom-Elektromotor als Bremsmotor 3 auf, dessen Rotorwelle eine Spindel 4 rotierend antreibt, auf der eine Spindelmutter 5 drehbar gelagert ist. Bei einer Rotation der Spindel 4 wird die Spindelmutter 5 axial verstellt. Die Spindelmutter 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich die Spindelmutter 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt die Spindelmutter 5 die innere Stirnseite des Bremskolbens 6, wodurch der axial verschieblich in der elektromechanischen Bremsvorrichtung 1 gelagerte Bremskolben 6 mit dem Bremsbelag 7 gegen die zugewandte Stirnfläche der Bremsscheibe 10 gedrückt wird.

Auch der Bremsmotor 3 wird von dem Regel- bzw. Steuergerät 12 angesteuert, das im Fahrzeug verbaut ist. Das Regel- bzw. Steuergerät 12 liefert als Ausgang eine Versorgungsspannung U_{S0}, mit der der elektrische Bremsmotor 3 beaufschlagt wird.

Die Feststellbremse und die hydraulische Fahrzeugbremse 21 wirken beide auf den Bremskolben 6. Bei einer Betätigung hydraulischen Fahrzeugbremse 21 wird die dem Bremsmotor zugewandte Rückseite des Bremskolbens 6 mit unter Druck stehendem Hydraulikfluid beaufschlagt.

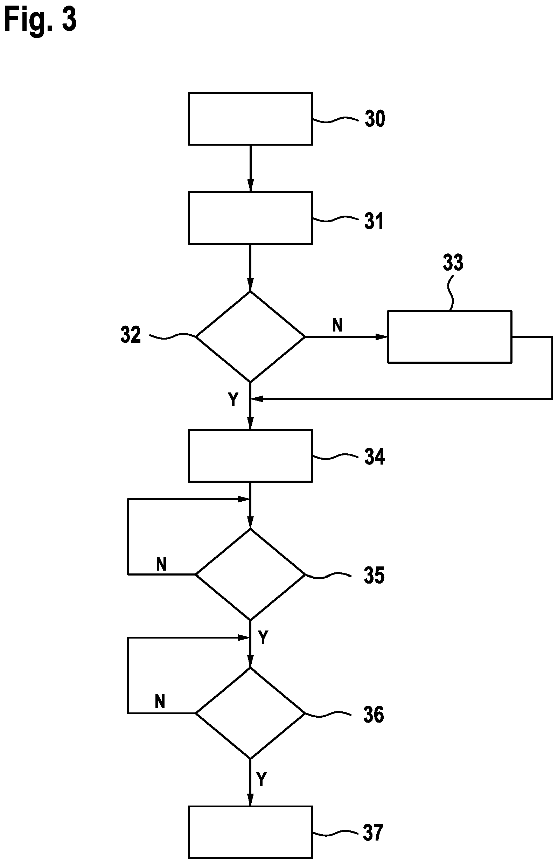

In Fig. 3 ist ein Ablaufschema zum Abbremsen eines Fahrzeugs im Parkbetrieb für den Fall dargestellt, dass die hydraulische Fahrzeugbremse während eines Parkvorgangs, der ggf. zumindest teilweise automatisiert durchgeführt wird, ausfällt. Das Fahrzeug weist als Antrieb einen Verbrennungsmotor auf, an den ein Automatikgetriebe angekoppelt ist. Im Fahrzeug wird nur entweder die Hinterachse oder die Vorderachse angetrieben.

Zunächst wird im ersten Verfahrensschritt 30 der Ausfall der hydraulischen Fahrzeugbremse festgestellt. Um dennoch das Fahrzeug unfallfrei abbremsen zu können, wird im nächsten Verfahrensschritt 31 die elektromechanische Bremsvorrichtung gestartet, über die auf elektromechanischem Wege eine das Fahrzeug bis zum Stillstand abbremsende Klemmkraft erzeugt wird.

Zusätzlich wird über den Antriebsstrang des Fahrzeugs ein abbremsendes Moment erzeugt, um den Bremsvorgang abzukürzen. Hierzu wird im nächsten Verfahrensschritt 32 abgeprüft, ob die Stellung des Automatikgetriebes in Fahrposition steht. Ist dies nicht der Fall, wird der Nein-Verzweigung ("N") folgend zum Verfahrensschritt 33 fortgefahren, in welchem über Stellsignale eines Regel- bzw. Steuergeräts im Automatikgetriebe die kleinste Gangstufe eingelegt wird. Anschließend wird zum nächsten Verfahrensschritt 34 fortgefahren.

Ergibt die Abfrage im Schritt 32, dass die Stellung des Automatikgetriebes in Fahrposition steht, wird unmittelbar - gegebenenfalls nach Einlegen der kleinsten Gangstufe - der Ja-Verzweigung ("Y") folgend zum Schritt 34 vorgerückt, in welchem der als Verbrennungsmotor ausgeführte Antriebsmotor im Fahrzeug ausgestellt wird. In Kombination mit der kleinsten Gangstufe, die im Automatikgetriebe eingestellt ist, wird ein hohes Motorschleppmoment wirksam, über das das Fahrzeug zusätzlich abgebremst wird.

Im folgenden Verfahrensschritt 35 erfolgt die Abfrage, ob das Fahrzeug bereits steht. Sofern dies noch nicht der Fall ist, wird der Nein-Verzweigung folgend wieder zu Beginn der Abfrage gemäß Schritt 35 zurückgekehrt und die Abfrage in zyklischen Abständen erneut durchlaufen.

Nach dem Stillstand des Fahrzeuges wird der Ja-Verzweigung folgend zum Schritt 36 vorgerückt, in welchem abgefragt wird, ob in der elektromechanischen Bremsvorrichtung die gewünschte Zielklemmkraft erreicht worden ist. Hiermit wird sichergestellt, dass bei unterschiedlichen Abstellbedingungen, gegebenenfalls auch bei einem Abstellen des Fahrzeugs am Hang, eine ausreichend hohe Klemmkraft in der elektromechanischen Bremsvorrichtung wirksam ist, welche das Fahrzeug dauerhaft festsetzt. Ergibt die Abfrage im Schritt 36, dass die Zielklemmkraft noch nicht erreicht worden ist, wird der Nein-Verzweigung folgend wieder zum Beginn der Abfrage zurückgekehrt und die Abfrage in zyklischen Abständen erneut durchlaufen. In der Zwischenzeit wird eine zunehmende Klemmkraft in der elektromechanischen Bremsvorrichtung aufgebaut.

Ergibt die Abfrage im Schritt 36, dass die Zielklemmkraft erreicht worden ist, wird der Ja-Verzweigung folgend zum Schritt 37 vorgerückt, womit das Verfahren beendet ist. In der elektromechanischen Bremsvorrichtung ist eine ausreichend hohe Klemmkraft wirksam und das Fahrzeug befindet sich im Stillstand.

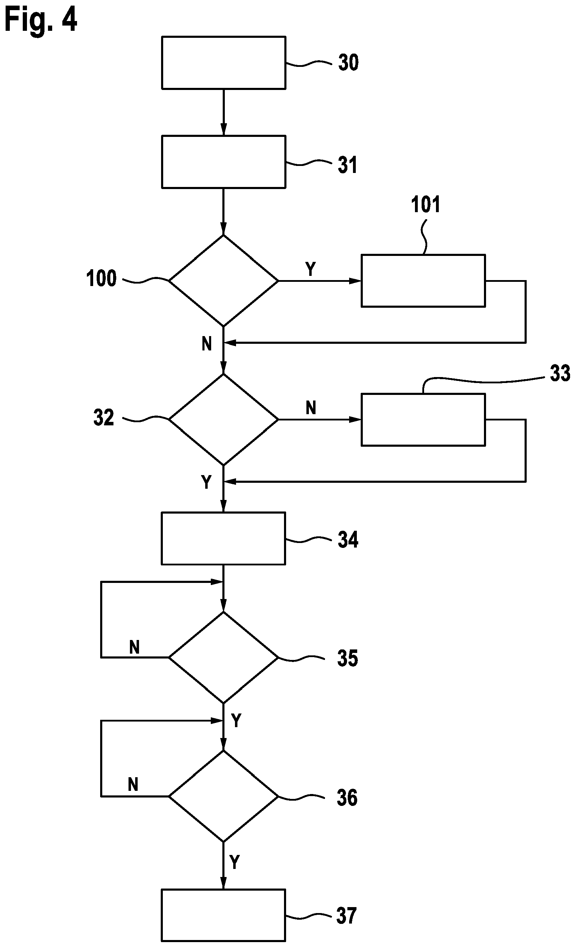

Der Verfahrensablauf gemäß Fig. 3 bezieht sich auf ein Fahrzeug mit verbrennungsmotorischem Antrieb und einer angetriebenen Fahrzeugachse. In Fig. 4 ist dagegen ein Verfahrensablauf für einen Notstopp im automatischen Parkbetrieb eines Fahrzeugs mit Verbrennungsmotor, Automatikgetriebe und Allradantrieb dargestellt für den Fall, dass die hydraulische Fahrzeugbremse ausfällt. Gleiche Verfahrensschritte wie in Fig. 3 sind mit gleichen Bezugszeichen versehen.

Analog zu Fig. 3 wird auch in Fig. 4 im Schritt 30 der Ausfall der hydraulischen Fahrzeugbremse festgestellt und im Schritt 31 der Notstopp eingeleitet, indem zunächst die elektromechanische Bremsvorrichtung gestartet wird.

Im folgenden Schritt 100 wird abgefragt, ob das Mitteldifferential zwischen Vorderachse und Hinterachse offensteht. Ist dies der Fall, wird der Ja-Verzweigung folgend zum Schritt 101 vorgerückt und das Mitteldifferential gesperrt, woraufhin zum nächsten Schritt 32 vorgerückt wird. Ergibt dagegen die Abfrage im Schritt 100, dass das Mitteldifferential nicht offen ist, liegt bereits die Sperrposition vor und es wird der Nein-Verzweigung folgend direkt zur nächsten Abfrage 32 vorgerückt.

Die nächsten Verfahrensschritte 32 bis 37 entsprechen denjenigen aus Fig. 3. Im Schritt 32 wird die Getriebestellung abgefragt, im Schritt 33 erforderlichenfalls der kleinste Gang im Getriebe eingestellt. Im Schritt 34 wird der Verbrennungsmotor ausgeschaltet, im Schritt 35 erfolgt die Abfrage, ob das Fahrzeug steht. Im Schritt 36 wird abgefragt, ob die Zielklemmkraft in der elektromechanischen Bremsvorrichtung bereits erreicht worden ist. Im Schritt 37 wird das Verfahren beendet, nachdem die Zielklemmkraft eingestellt worden ist und das Fahrzeug sich im Stillstand befindet.

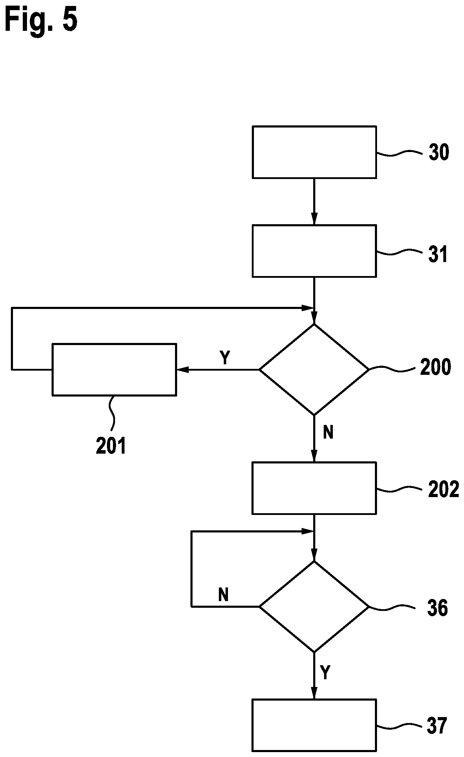

In Fig. 5 ist ein Verfahrensablauf für ein Abbremsen eines Fahrzeugs im Parkbetrieb bei einem Ausfall der hydraulischen Fahrzeugbremse für ein Fahrzeug mit elektromotorischem Antrieb dargestellt. Auch bei Fig. 5 sind gleiche Verfahrensschritte wie bei Fig. 3 und 4 mit gleichen Bezugszeichen versehen.

Im Schritt 30 wird der Ausfall der hydraulischen Fahrzeugbremse festgestellt, woraufhin im Schritt 31 der Notstopp eingeleitet wird und die elektromechanische Bremsvorrichtung gestartet wird. Im folgenden Schritt 200 wird abgefragt, ob das Fahrzeug vorwärts fährt oder rückwärts fährt. Bewegt sich das Fahrzeug, wird der Ja-Verzweigung folgend zum Schritt 201 verzweigt und der elektrische Antriebsmotor entgegengesetzt zur Bewegungsrichtung des Fahrzeugs beschleunigt. Hierdurch wird über den elektrischen Antriebsmotor ein das Fahrzeug abbremsendes Moment erzeugt. Im Anschluss an den Schritt 201 wird wieder zur Abfrage gemäß Schritt 200 zurückgekehrt und in zyklischen Abständen erneut überprüft, ob sich das Fahrzeug noch bewegt.

Ergibt die Abfrage im Schritt 200, dass das Fahrzeug stillsteht, wird der Nein-Verzweigung folgend zum Schritt 202 vorgerückt und die Ansteuerung des elektrischen Antriebsmotors angepasst, um ein Beschleunigen des Fahrzeugs aus dem Stillstand heraus in die Gegenrichtung zu verhindern. Sofern jedoch das Fahrzeug an einer Steigung steht und über die elektromechanische Bremsvorrichtung noch keine ausreichende Klemmkraft zur Verfügung steht, wird im Schritt 202 der elektrische Antriebsmotor in der Weise angesteuert, dass eine die Hangabtriebskraft kompensierende Kraft im Antriebsmotor erzeugt wird.

Die Schritte 36 und 37 entsprechen denjenigen aus den Fig. 3 und 4. Im Schritt 36 wird abgefragt, ob in der elektromechanischen Bremsvorrichtung die Zielklemmkraft erreicht worden ist. Ist dies der Fall, wird im Schritt 37 der elektrische Antriebsmotor abgeschaltet, das Verfahren ist beendet.

## Patentansprüche

1. Verfahren zum Abbremsen eines Fahrzeugs (20), dessen Bremssystem eine hydraulische Fahrzeugbremse (21) und eine elektromechanische Bremsvorrichtung mit einem elektrischen Bremsmotor (3) umfasst, wobei bei einem Ausfall der hydraulischen Fahrzeugbremse (21) der Bremsmotor (3) der elektromechanischen Bremsvorrichtung zur Erzeugung einer Bremskraft betätigt und zusätzlich im Antriebsstrang des Fahrzeugs (20) ein abbremsendes Moment erzeugt wird, **dadurch gekennzeichnet, dass** nach dem Ausfall der hydraulischen Fahrzeugbremse (21) zunächst die elektromechanische Bremsvorrichtung betätigt und anschließend der Antriebsstrang in der Weise verstellt wird, dass ein abbremsendes Moment erzeugt wird, wobei das abbremsende Moment des Antriebsstrangs über den Zeitpunkt hinaus aufrecht erhalten wird, zu dem in der elektromechanischen Bremsvorrichtung eine Bremskraft bereitgestellt wird.

2. Verfahren nach Anspruch 1, **dadurch gekennzeichnet, dass** das Verfahren nur unterhalb einer Grenzgeschwindigkeit durchgeführt wird.

3. Verfahren nach Anspruch 1 oder 2, **dadurch gekennzeichnet, dass** das Verfahren im Parkbetrieb durchgeführt wird.

4. Verfahren nach einem der Ansprüche 1 bis 3, **dadurch gekennzeichnet, dass** in einem Automatikgetriebe (24) im Fahrzeug (20) die kleinstmögliche Gangstufe eingestellt wird.

5. Verfahren nach einem der Ansprüche 1 bis 4, **dadurch gekennzeichnet, dass** ein Verbrennungsmotor (23) im Antriebsstrang abgeschaltet wird.

6. Verfahren nach einem der Ansprüche 1 bis 5, **dadurch gekennzeichnet, dass** ein Elektromotor im Antriebsstrang in den Generatorbetrieb geschaltet wird.

7. Verfahren nach einem der Ansprüche 1 bis 5, **dadurch gekennzeichnet, dass** ein Elektromotor im Antriebsstrang entgegen der Fahrtrichtung beschleunigt wird.

8. Verfahren nach einem der Ansprüche 1 bis 7, **dadurch gekennzeichnet, dass** ein Mitteldifferential (28) zwischen Vorder- und Hinterachse (26, 27) eines Allradfahrzeugs gesperrt wird.

9. Regel- bzw. Steuergerät (12) zur Durchführung des Verfahrens nach einem der Ansprüche 1 bis 8.

10. Fahrzeug mit einem Bremssystem, das eine hydraulische Fahrzeugbremse (21) und eine elektromechanische Bremsvorrichtung mit einem elektrischen Bremsmotor (3) umfasst, mit einem Regel- bzw. Steuergerät (12) nach Anspruch 9 zur Ansteuerung der einstellbaren Komponenten des Bremssystems und des Antriebsstrangs im Fahrzeug (20).

## Claims

1. Method for braking a vehicle (20), the brake system of which comprises a hydraulic vehicle brake (21) and an electromechanical brake device with an electric brake motor (3), wherein in the event of a failure of the hydraulic vehicle brake (21) the brake motor (3) of the electromechanical brake device is activated in order to generate a braking force, and in addition a braking torque is generated in the drive train of the vehicle (20), **characterized in that** after the failure of the hydraulic vehicle brake (21) the electromechanical brake device is firstly activated, and subsequently the drive train is adjusted in such a way that a braking torque is generated, wherein the braking torque of the drive train is maintained beyond the time at which a braking force is made available in the electromechanical brake device.

2. Method according to Claim 1, **characterized in that** the method is carried out only below a limiting speed.

3. Method according to Claim 1 or 2, **characterized in that** the method is carried out in the parking mode.

4. Method according to one of Claims 1 to 3, **characterized in that** the smallest possible gear stage is set in an automatic transmission (24) in the vehicle (20).

5. Method according to one of Claims 1 to 4, **characterized in that** an internal combustion engine (23) in the drive train is switched off.

6. Method according to one of Claims 1 to 5, **characterized in that** an electric motor in the drive train is shifted into the generator mode.

7. Method according to one of Claims 1 to 5, **characterized in that** an electric motor in the drive train is accelerated counter to the direction of the travel.

8. Method according to one of Claims 1 to 7, **characterized in that** a central differential (28) between the front axle (26) and the rear axle (27) of an all-wheel drive vehicle is locked.

9. Closed-loop or open-loop control unit (12) for carrying out the method according to one of Claims 1 to 8.

10. Vehicle having a brake system which comprises a hydraulic vehicle brake (21) and an electromechanical brake device with an electric brake motor (3), having a closed-loop or open-loop control unit (12) according to Claim 9 for actuating the adjustable components of the brake system and of the drive train in the vehicle (20).

## Revendications

1. Procédé de freinage d'un véhicule (20) dont le système de freinage comprend un frein de véhicule hydraulique (21) et un dispositif de freinage électromécanique avec un moteur de freinage électrique (3), dans lequel, en cas de panne du frein de véhicule hydraulique (21), le moteur de freinage (3) du dispositif de freinage électromécanique est actionné pour générer une force de freinage et un couple de freinage est en outre généré dans la chaîne cinématique du véhicule (20), **caractérisé en ce qu'**après la panne du frein de véhicule hydraulique (21), tout d'abord le dispositif de freinage électromécanique est actionné et ensuite la chaîne cinématique est réglée de manière à ce qu'un couple de freinage soit généré, le couple de freinage de la chaîne cinématique étant maintenu au-delà du moment auquel une force de freinage est fournie dans le dispositif de freinage électromécanique.

2. Procédé selon la revendication 1, **caractérisé en ce que** le procédé n'est mis en oeuvre qu'en dessous d'une vitesse limite.

3. Procédé selon la revendication 1 ou 2, **caractérisé en ce que** le procédé est mis en oeuvre en mode de stationnement.

4. Procédé selon l'une quelconque des revendications 1 à 3, **caractérisé en ce que** dans une boîte de vitesses automatique (24) dans le véhicule (20), le rapport de transmission le plus petit possible est ajusté.

5. Procédé selon l'une quelconque des revendications 1 à 4, **caractérisé en ce qu'**un moteur à combustion interne (23) dans la chaîne cinématique est arrêté.

6. Procédé selon l'une quelconque des revendications 1 à 5, **caractérisé en ce qu'**un moteur électrique dans la chaîne cinématique est commuté en mode générateur.

7. Procédé selon l'une quelconque des revendications 1 à 5, **caractérisé en ce qu'**un moteur électrique dans la chaîne cinématique est accéléré à l'encontre de la direction de conduite.

8. Procédé selon l'une quelconque des revendications 1 à 7, **caractérisé en ce qu'**un différentiel central (28) entre l'essieu avant et l'essieu arrière (26, 27) d'un véhicule à quatre roues motrices est bloqué.

9. Appareil de réglage et de commande (12) pour mettre en oeuvre le procédé selon l'une quelconque des revendications 1 à 8.

10. Véhicule comprenant un système de freinage qui comprend un frein de véhicule hydraulique (21) et un dispositif de freinage électromécanique avec un moteur de freinage électrique (3), avec un appareil de réglage et de commande (12) selon la revendication 9 pour la commande des composants ajustables du système de freinage et de la chaîne cinématique dans le véhicule (20).
